# EUROPÄISCHE PATENTANMELDUNG

(11) **EP 4 637 017 A1**
(43) Veröffentlichungstag der Anmeldung: **22.10.2025**
(21) Anmeldenummer: 24170588.8
(22) Anmeldetag: 16.04.2024
(51) Int. Cl.: H02M 7/487, H02M 7/483, H02M 1/00, H01L 29/739, H01L 29/16

(54) **ANSTEUERN EINES 3-STUFEN-PULSWECHSELRICHTERS**

(71) Anmelder: Siemens Aktiengesellschaft, 80333 München (DE)
(72) Erfinder: Gick, Sebastian, 96167 Königsfeld (DE); Bakran, Mark-Matthias, 91052 Erlangen (DE); Pfeifer, Markus, 90455 Nürnberg (DE)
(74) Vertreter: Siemens Patent Attorneys

(57) **Zusammenfassung**

Die Erfindung betrifft ein Verfahren zum Ansteuern eines 3-Stufen-Pulswechselrichters (1) des T-Typs. In einem ersten Betriebsmodus des Pulswechselrichters (1) wird ein Strom (I) während einer ersten Halbperiode eines durch den Pulswechselrichter (1) zu erzeugenden Wechselstroms abwechselnd durch einen ersten Brückenzweig (B1) und einen dritten Brückenzweig (B3) des Pulswechselrichters (1) und in der zweiten Halbperiode abwechselnd durch einen zweiten Brückenzweig (B2) und den dritten Brückenzweig (B3) des Pulswechselrichters (1) geleitet. In einem zweiten Betriebsmodus des Pulswechselrichters (1) wird der Strom (I) abwechselnd durch den ersten Brückenzweig (B1) und den zweiten Brückenzweig (B2) geleitet, wobei bei jeder Umschaltung der Stromführung zwischen dem ersten Brückenzweig (B1) und dem zweiten Brückenzweig (B2) der Strom (I) für eine Verzögerungszeitdauer (Δt) durch den dritten Brückenzweig (B3) geleitet wird. Der Pulswechselrichter (1) wird in dem ersten Betriebsmodus betrieben, wenn der Stromstärkebetrag kleiner als ein Stromschwellenwert ist, und andernfalls wird der Pulswechselrichter (1) in dem zweiten Betriebsmodus betrieben.

## Beschreibung

Die Erfindung betrifft einen 3-Stufen-Pulswechselrichter, der eine T-Typ-Schaltungstopologie aufweist, Insbesondere betrifft die Erfindung ein Verfahren zum Ansteuern eines derartigen Pulswechselrichters.

Unter einem Pulswechselrichter wird ein Wechselrichter verstanden, der aus einer Gleichspannung eine gepulste Spannung erzeugt. Die gepulste Spannung wird aus kurzen Spannungspulsen gebildet, deren Pulsdauer mit einer Pulsweitenmodulation moduliert wird, so dass durch eine zeitliche Glättung der Pulsdauern eine Wechselspannung erzeugt wird. Die Periodendauer der Wechselspannung ist dabei deutlich größer als die Periodendauer der Pulsweitenmodulation. Pulswechselrichter gibt es in verschiedenen Ausführungen. In der Regel weist ein Pulswechselrichter Halbleiterschalter auf, die abwechselnd ein- und abgeschaltet werden, um die Spannungspulse zu erzeugen. In der einfachsten Ausführung ist der Pulswechselrichter als ein so genannter 2-Stufen-Pulswechselrichter (engl. 2-level inverter), der auch als Zweipunkt-Pulswechselrichter oder als 2-Stufen- oder Zweipunkt-Wechselrichter bezeichnet wird, ausgebildet, bei dem die gepulste Spannung nur zwei Spannungswerte (zwei "Stufen") annehmen kann. Üblicherweise weist ein 2-Stufen-Pulswechselrichter eine Halbbrücke mit zwei Halbleiterschaltern auf, die jeweils in einem Brückenzweig der Halbbrücke angeordnet sind und abwechselnd ein- und abgeschaltet werden. Bei einem 3-Stufen-Pulswechselrichter (engl. 3-level inverter) kann die gepulste Spannung drei Spannungswerte (drei "Stufen") annehmen. Ein 3-Stufen-Pulswechselrichter mit einer T-Typ-Schaltungstopologie weist gegenüber einem 2-Stufen-Pulswechselrichter mit zwei Brückenzweigen einen dritten Brückenzweig auf, in dem in der Regel zwei Halbleiterschalter mit einander entgegengesetzten Durchlassrichtungen angeordnet sind. Dabei wird durch den dritten Brückenzweig ein Spannungswert realisiert, der zwischen den durch die beiden anderen Brückenzweigen realisierten Spannungswerten liegt.

Die Veröffentlichung T.-H. Kim und W.-C. Lee, "Mode transition scheme for optimal efficient operation of a 3-level T-type inverter," 2017 IEEE 3rd International Future Energy Electronics Conference and ECCE Asia (IFEEC 2017 - ECCE Asia), Kaohsiung, 2017, S. 556-560, offenbart einen Wechsel zwischen zwei Betriebsmodi eines 3-Stufen-Pulswechselrichters des T-Typs in Abhängigkeit von Schalt- und Leitungsverlustberechnungen. In einem Betriebsmodus wird der Pulswechselrichter wie ein 2-Stufen-Pulswechselrichter betrieben, in dem anderen Betriebsmodus wird der Pulswechselrichter wie ein 3-Stufen-Pulswechselrichter betrieben.

Der Erfindung liegt die Aufgabe zugrunde, eine verbesserte Ansteuerung eines 3-Stufen-Pulswechselrichters des T-Typs anzugeben.

Die Aufgabe wird erfindungsgemäß durch ein Verfahren mit den Merkmalen des Anspruchs 1 und einen 3-Stufen-Pulswechselrichter mit den Merkmalen des Anspruchs 8 gelöst.

Vorteilhafte Ausgestaltungen der Erfindung sind Gegenstand der Unteransprüche.

Das erfindungsgemäße Verfahren betrifft das Ansteuern eines 3-Stufen-Pulswechselrichters, der eine T-Typ-Schaltungstopologie aufweist mit einem ersten Brückenzweig, der mit einem Eingangsanschluss für einen positiven Pol einer Eingangsspannung des Pulswechselrichters verbunden ist und einen ersten Halbleiterschalter und eine antiparallel zu dem ersten Halbleiterschalter geschaltete erste Diode aufweist, einem zweiten Brückenzweig, der mit einem Eingangsanschluss für einen negativen Pol der Eingangsspannung verbunden ist und einen zweiten Halbleiterschalter und eine antiparallel zu dem zweiten Halbleiterschalter geschaltete zweite Diode aufweist, und einem dritten Brückenzweig, der mit einem Eingangsanschluss für einen Mittelabgriff der Eingangsspannung verbunden ist und einen dritten Halbleiterschalter, einen vierten Halbleiterschalter, eine antiparallel zu dem dritten Halbleiterschalter geschaltete dritte Diode und eine antiparallel zu dem vierten Halbleiterschalter geschaltete vierte Diode aufweist. Bei dem Verfahren
- wird ein Stromschwellenwert für einen Stromstärkebetrag eines in dem Pulswechselrichter fließenden Stroms definiert,
- in einem ersten Betriebsmodus des Pulswechselrichters wird der Strom während einer ersten Halbperiode eines durch den Pulswechselrichter zu erzeugenden Wechselstroms abwechselnd durch den ersten Brückenzweig und den dritten Brückenzweig und in der zweiten Halbperiode abwechselnd durch den zweiten Brückenzweig und den dritten Brückenzweig geleitet,
- in einem zweiten Betriebsmodus des Pulswechselrichters wird der Strom abwechselnd durch den ersten Brückenzweig und den zweiten Brückenzweig geleitet, wobei bei jeder Umschaltung der Stromführung von dem ersten Brückenzweig auf den zweiten Brückenzweig und von dem zweiten Brückenzweig auf den ersten Brückenzweig der Strom für eine Verzögerungszeitdauer durch den dritten Brückenzweig geleitet wird, und
- der Pulswechselrichter wird in dem ersten Betriebsmodus betrieben, wenn der Stromstärkebetrag kleiner als der Stromschwellenwert ist, und andernfalls in dem zweiten Betriebsmodus betrieben.

Unter dem Ansteuern eines 3-Stufen-Pulswechselrichters wird dabei ein Ansteuern der Halbleiterschalter über deren Steueranschlüsse (Gate-Anschlüsse) verstanden.

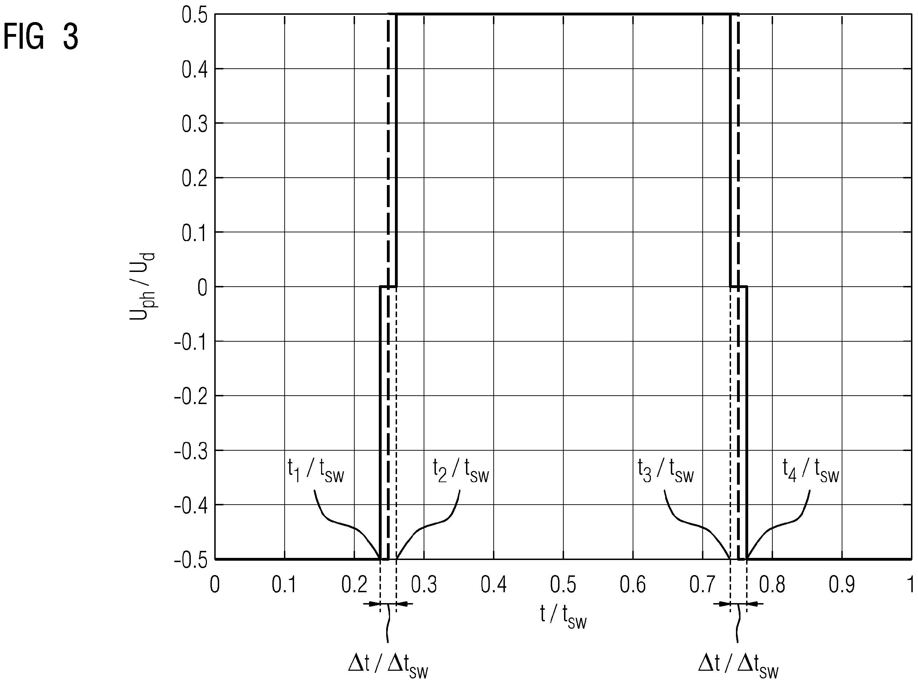

Die Erfindung sieht also für einen 3-Stufen-Pulswechselrichters des T-Typs zwei voneinander verschiedene Betriebsmodi vor. Ein erster Betriebsmodus ist ein Betriebsmodus, in dem ein 3-Stufen-Pulswechselrichter des T-Typs üblicherweise betrieben wird. Dieser Betriebsmodus wird bei in dem Pulswechselrichter fließenden Strömen verwendet, deren Stromstärkebetrag kleiner als ein Stromschwellenwert ist. Der zweite Betriebsmodus wird bei höheren Stromstärkebeträgen verwendet und ist eine Modifikation eines 2-Stufen-Betriebsmodus. Statt wie in einem 2-Stufen-Betriebsmodus den Strom abwechselnd nur durch den ersten Brückenzweig und den zweiten Brückenzweig zu leiten, wird der Strom in dem zweiten Betriebsmodus bei jeder Umschaltung der Stromführung von dem ersten Brückenzweig auf den zweiten Brückenzweig und von dem zweiten Brückenzweig auf den ersten Brückenzweig für eine Verzögerungszeitdauer durch den dritten Brückenzweig geleitet. Dementsprechend ist die von dem Pulswechselrichter erzeugte Ausgangsspannung in dem zweiten Betriebsmodus keine Rechteckspannung mit einem oberen Spannungswert und einem unteren Spannungswert, sondern eine gestufte Rechteckspannung, bei der die Ausgangsspannung bei jedem Wechsel zwischen dem unteren Spannungswert und dem oberen Spannungswert für eine Verzögerungszeitdauer einen Spannungswert annimmt, der zwischen dem unteren Spannungswert und dem oberen Spannungswert liegt. Dadurch werden gegenüber dem 2-Stufen-Betriebsmodus Schaltverluste reduziert, da Schaltvorgänge gegen geringere Spannungsunterschiede als in dem 2-Stufen-Betriebsmodus ausgeführt werden, siehe dazu auch die Beschreibung der Figur 3 unten. Die erfindungsgemäße Ansteuerung eines 3-Stufen-Pulswechselrichters des T-Typs ist insbesondere für Pulswechselrichter vorgesehen, deren Halbleiterschalter des dritten Brückenzweigs eine geringere Stromtragfähigkeit als der erste Halbleiterschalter und der zweite Halbleiterschalter aufweisen. In diesem Fall wird der Pulswechselrichter in dem zweiten Betriebsmodus betrieben, wenn der Stromstärkebetrag eines in dem Pulswechselrichter fließenden Stroms die Stromtragfähigkeit der Halbleiterschalter des dritten Brückenzweigs überschreitet. Die Verzögerungszeitdauer ist in diesem Fall sehr kurz, um die Halbleiterschalter des dritten Brückenzweigs nicht zu überlasten und dadurch zu schädigen.

Bei einer Ausgestaltung des erfindungsgemäßen Verfahrens wird die Verzögerungszeitdauer als eine Zeitdauer definiert, innerhalb derer die Speicherladung in einem Halbleiterbauelement des ersten Brückenzweiges oder des zweiten Brückenzweiges nach einer Abschaltung des Stroms in diesem Brückenzweig abgebaut wird. Dabei kann vorgesehen sein, die Verzögerungszeitdauer in Abhängigkeit von der Stromstärke des Stroms zu definieren, der vor dem Abschalten des Stroms in dem Pulswechselrichter fließt. Diese Ausgestaltung des erfindungsgemäßen Verfahrens berücksichtigt, dass nach dem Abschalten des in einem Brückenzweig fließenden Stroms ein Halbleiterschalter oder eine Diode, durch den oder die der Strom in diesem Brückenzweig geflossen ist, kurzzeitig noch eine elektrische Ladung aufweist. Diese Speicherladung ist in der Regel von der Stromstärke des Stroms abhängig, der vor dem Abschalten des Stroms in dem jeweiligen Brückenzweig fließt, so dass auch die Zeitdauer für den Abbau der Speicherladung von der Stromstärke abhängig ist.

Bei einer weiteren Ausgestaltung des erfindungsgemäßen Verfahrens sind der dritte Halbleiterschalter und der vierte Halbleiterschalter für eine geringere Stromtragfähigkeit als der erste Halbleiterschalter und der zweite Halbleiterschalter ausgelegt. In diesem Fall wird der Stromschwellenwert beispielsweise als ein Stromstärkebetrag definiert, der die Stromtragfähigkeit des dritten Halbleiterschalters und des vierten Halbleiterschalters charakterisiert. Diese Ausgestaltung des erfindungsgemäßen Verfahrens berücksichtigt, dass bei einer geringeren Stromtragfähigkeit der Halbleiterschalter des dritten Brückenzweigs als der Halbleiterschalter des ersten und des zweiten Brückenzweigs der Pulswechselrichter bei Strömen mit Stromstärkebeträgen oberhalb der Stromtragfähigkeit der Halbleiterschalter des dritten Brückenzweigs nicht mehr in dem ersten Betriebsmodus betrieben werden kann, da dies die Halbleiterschalter des dritten Brückenzweigs überlasten würde. Daher wird der Pulswechselrichter bei Strömen mit einem die Stromtragfähigkeit der Halbleiterschalter des dritten Brückenzweigs überschreitenden Stromstärkebetrag in dem zweiten Betriebsmodus betrieben.

Bei einer weiteren Ausgestaltung des erfindungsgemäßen Verfahrens sind der dritte Halbleiterschalter und der vierte Halbleiterschalter von einem anderen Halbleitertyp als der erste Halbleiterschalter und der zweite Halbleiterschalter. Beispielsweise sind der erste Halbleiterschalter und der zweite Halbleiterschalter jeweils ein Bipolartransistor mit isolierter Gate-Elektrode (IGBT, Abkürzung für Insulated-Gate Bipolar Transistor) und der dritte Halbleiterschalter und der vierte Halbleiterschalter sind jeweils ein Metalloxid-Halbleiter-Feldeffekttransistor (MOSFET, Abkürzung für Metal-Oxide-Semiconductor Field-Effect Transistor) auf Basis von Siliziumcarbid, wobei die dritte Diode von der Bodydiode des dritten Halbleiterschalters gebildet wird und die vierte Diode von der Bodydiode des vierten Halbleiterschalters gebildet wird. In dem dritten Brückenzweig werden Halbleiterschalter von einem anderen Halbleitertyp als in den beiden anderen Brückenzweigen beispielsweise verwendet, um eine Schaltgeschwindigkeit zu erhöhen. Die in dem dritten Brückenzweig verwendeten Halbleiterschalter sind dabei beispielsweise höherwertig und damit teurer als vergleichbare Halbleiterschalter eines in den beiden anderen Brückenzweigen verwendeten Halbleitertyps. Um dadurch verursachte zusätzliche Kosten zu reduzieren, werden in dem dritten Brückenzweig Halbleiterschalter mit einer geringeren Stromtragfähigkeit verwendet als in den beiden anderen Brückenzweigen. Daher eignet sich das erfindungsgemäße Verfahren insbesondere für derartige Pulswechselrichter.

Ein erfindungsgemäßer 3-Stufen-Pulswechselrichter weist eine T-Typ-Schaltungstopologie auf und umfasst
- einen ersten Brückenzweig, der mit einem Eingangsanschluss für einen positiven Pol einer Eingangsspannung des Pulswechselrichters verbunden ist und einen ersten Halbleiterschalter und eine antiparallel zu dem ersten Halbleiterschalter geschaltete erste Diode aufweist,
- einen zweiten Brückenzweig, der mit einem Eingangsanschluss für einen negativen Pol der Eingangsspannung verbunden ist und einen zweiten Halbleiterschalter und eine antiparallel zu dem zweiten Halbleiterschalter geschaltete zweite Diode aufweist,
- einen dritten Brückenzweig, der mit einem Eingangsanschluss für einen Mittelabgriff der Eingangsspannung verbunden ist und einen dritten Halbleiterschalter, einen vierten Halbleiterschalter, eine antiparallel zu dem dritten Halbleiterschalter geschaltete dritte Diode und eine antiparallel zu dem vierten Halbleiterschalter geschaltete vierte Diode aufweist, und
- eine Steuereinheit, die eingerichtet ist, die Halbleiterschalter des Pulswechselrichters in Abhängigkeit von einem Stromstärkebetrag eines in dem Pulswechselrichter fließenden Stroms derart anzusteuern, dass der Pulswechselrichter in einem ersten Betriebsmodus betrieben wird, wenn der Stromstärkebetrag kleiner als ein Stromschwellenwert ist, und andernfalls in einem zweiten Betriebsmodus betrieben wird, wobei
- in dem ersten Betriebsmodus des Pulswechselrichters der Strom während einer ersten Halbperiode eines durch den Pulswechselrichter zu erzeugenden Wechselstroms abwechselnd durch den ersten Brückenzweig und den dritten Brückenzweig und in der zweiten Halbperiode abwechselnd durch den zweiten Brückenzweig und den dritten Brückenzweig geleitet wird und
- in dem zweitem Betriebsmodus des Pulswechselrichters der Strom abwechselnd durch den ersten Brückenzweig und den zweiten Brückenzweig geleitet wird, wobei bei jeder Umschaltung der Stromführung von dem ersten Brückenzweig auf den zweiten Brückenzweig und von dem zweiten Brückenzweig auf den ersten Brückenzweig der Strom für eine Verzögerungszeitdauer durch den dritten Brückenzweig geleitet wird.

Bei einer Ausgestaltung des erfindungsgemäßen Pulswechselrichters ist die Verzögerungszeitdauer als eine Zeitdauer definiert, innerhalb derer die Speicherladung in einem Halbleiterbauelement des ersten Brückenzweiges oder des zweiten Brückenzweiges nach einer Abschaltung des Stroms in diesem Brückenzweig abgebaut wird.

Bei einer weiteren Ausgestaltung des erfindungsgemäßen Pulswechselrichters ist die Verzögerungszeitdauer in Abhängigkeit von einer Stromstärke des Stroms definiert, der vor dem Abschalten des Stroms in dem Pulswechselrichter fließt.

Bei einer weiteren Ausgestaltung des erfindungsgemäßen Pulswechselrichters sind der dritte Halbleiterschalter und der vierte Halbleiterschalter für eine geringere Stromtragfähigkeit als der erste Halbleiterschalter und der zweite Halbleiterschalter ausgelegt. In diesem Fall ist der Stromschwellenwert beispielsweise als ein Stromstärkebetrag definiert, der die Stromtragfähigkeit des ersten Halbleiterschalters und des zweiten Halbleiterschalters charakterisiert.

Bei einer weiteren Ausgestaltung des erfindungsgemäßen Pulswechselrichters sind der dritte Halbleiterschalter und der vierte Halbleiterschalter von einem anderen Halbleitertyp als der erste Halbleiterschalter und der zweite Halbleiterschalter. Beispielsweise sind der erste Halbleiterschalter und der zweite Halbleiterschalter jeweils ein Bipolartransistor mit isolierter Gate-Elektrode und der dritte Halbleiterschalter und der vierte Halbleiterschalter sind jeweils ein Metalloxid-Halbleiter-Feldeffekttransistoren auf Basis von Siliziumcarbid, wobei die dritte Diode von der Bodydiode des dritten Halbleiterschalters gebildet wird und die vierte Diode von der Bodydiode des vierten Halbleiterschalters gebildet wird.

Die Merkmale eines erfindungsgemäßen Pulswechselrichters entsprechen den Merkmalen des erfindungsgemäßen Verfahrens. Daher entsprechen auch die Vorteile eines erfindungsgemä-ßen Pulswechselrichters den oben genannten Vorteilen des erfindungsgemäßen Verfahrens.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 einen Schaltplan eines Ausführungsbeispiels eines erfindungsgemäßen 3-Stufen-Pulswechselrichters,
FIG 2 aufeinander folgende Schaltzustände des in Figur 1 gezeigten Pulswechselrichters in einem Betriebsmodus des Pulswechselrichters,
FIG 3 ein Diagramm einer von dem in Figur 1 gezeigten Pulswechselrichter erzeugten Ausgangsspannung in Abhängigkeit von einer Zeit.

Einander entsprechende Teile sind in den Figuren mit denselben Bezugszeichen versehen.

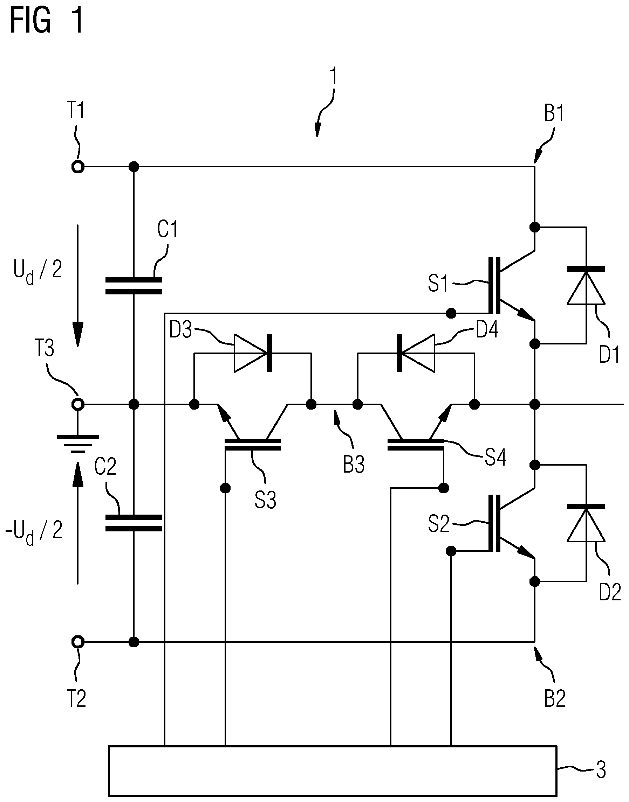

Figur 1 (FIG 1) zeigt einen Schaltplan eines Ausführungsbeispiels eines erfindungsgemäßen 3-Stufen-Pulswechselrichters 1. Der Pulswechselrichter 1 weist eine T-Typ-Schaltungstopologie mit einem ersten Brückenzweig B1, einem zweiten Brückenzweig B2 und einem dritten Brückenzweig B3 auf. Der erste Brückenzweig B1 ist mit einem Eingangsanschluss T1 für einen positiven Pol einer Eingangsspannung U_{d} des Pulswechselrichters 1 verbunden und weist einen ersten Halbleiterschalter S1 und eine antiparallel zu dem ersten Halbleiterschalter S1 geschaltete erste Diode D1 auf. Der zweite Brückenzweig B2 ist mit einem Eingangsanschluss T2 für einen negativen Pol der Eingangsspannung U_{d} des Pulswechselrichters 1 verbunden und weist einen zweiten Halbleiterschalter S2 und eine antiparallel zu dem zweiten Halbleiterschalter S2 geschaltete zweite Diode D2 auf. Der dritte Brückenzweig B3 ist mit einem Eingangsanschluss T3 für einen Mittelabgriff der Eingangsspannung U_{d} verbunden und weist einen dritten Halbleiterschalter S3, einen vierten Halbleiterschalter S4, eine antiparallel zu dem dritten Halbleiterschalter S3 geschaltete dritte Diode D3 und eine antiparallel zu dem vierten Halbleiterschalter S4 geschaltete vierte Diode D4 auf. Der dritte Eingangsanschluss T3 liegt auf einem Erdpotential, der erste Eingangsanschluss T1 liegt auf einem um U_{d}/2 höheren Potential als der dritte Eingangsanschluss T3, der zweite Eingangsanschluss T2 liegt auf einem um U_{d}/2 niedrigeren Potential als der dritte Eingangsanschluss T3. Der erste Eingangsanschluss T1 und der dritte Eingangsanschluss T3 sind durch einen ersten Kondensator C1 verbunden und der zweite Eingangsanschluss T2 und der dritte Eingangsanschluss T3 sind durch einen zweiten Kondensator C2 verbunden. Die Steueranschlüsse (Gate-Anschlüsse) der Halbleiterschalter S1, S2, S3, S4 sind jeweils mit einer Steuereinheit 3 verbunden.

Der dritte Halbleiterschalter S3 und der vierte Halbleiterschalter S4 weisen jeweils eine geringere Stromtragfähigkeit als der erste Halbleiterschalter S1 und der zweite Halbleiterschalter S2 auf. Beispielsweise sind der erste Halbleiterschalter S1 und der zweite Halbleiterschalter S2 jeweils ein Bipolartransistor mit isolierter Gate-Elektrode (IGBT) und der dritte Halbleiterschalter S3 und der vierte Halbleiterschalter S4 sind jeweils ein Metalloxid-Halbleiter-Feldeffekttransistor (MOSFET) auf Basis von Siliziumcarbid, wobei die Dioden D3 und D4 von den Bodydioden der Halbleiterschalter S3 und S4 gebildet werden.

Die Steuereinheit 3 ist eingerichtet, die Halbleiterschalter S1, S2, S3, S4 in Abhängigkeit von einem Stromstärkebetrag eines in dem Pulswechselrichter 1 fließenden Stroms I pulsweitenmoduliert derart anzusteuern, dass der Pulswechselrichter 1 in einem ersten Betriebsmodus betrieben wird, wenn der Stromstärkebetrag kleiner als ein Stromschwellenwert ist, und andernfalls in einem zweiten Betriebsmodus betrieben wird.

Der erste Betriebsmodus ist ein Betriebsmodus, in dem ein 3-Stufen-Pulswechselrichter des T-Typs üblicherweise betrieben wird. In diesem Betriebsmodus wird der Strom I während einer ersten Halbperiode eines durch den Pulswechselrichter 1 zu erzeugenden Wechselstroms abwechselnd durch den ersten Brückenzweig B1 und den dritten Brückenzweig B3 und in der zweiten Halbperiode abwechselnd durch den zweiten Brückenzweig B2 und den dritten Brückenzweig B3 geleitet.

In dem zweiten Betriebsmodus des Pulswechselrichters 1 wird der Strom I abwechselnd durch den ersten Brückenzweig B1 und den zweiten Brückenzweig B2 geleitet, wobei bei jeder Umschaltung der Stromführung von dem ersten Brückenzweig B1 auf den zweiten Brückenzweig B2 und von dem zweiten Brückenzweig B2 auf den ersten Brückenzweig B1 der Strom I für eine Verzögerungszeitdauer Δt durch den dritten Brückenzweig B3 geleitet wird.

Der Stromschwellenwert wird als ein Stromstärkebetrag definiert, der die Stromtragfähigkeit des dritten Halbleiterschalters S3 und des vierten Halbleiterschalters S4 charakterisiert.

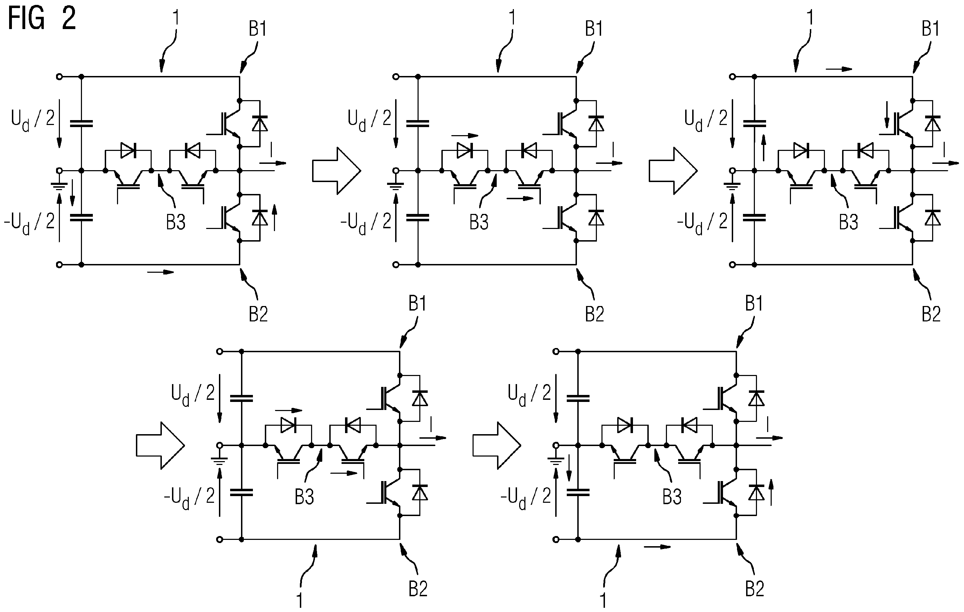

Figur 2 (FIG 2) zeigt aufeinander folgende Schaltzustände des in Figur 1 gezeigten Pulswechselrichters 1 in dem zweiten Betriebsmodus während einer Periodendauer t_{sw} der Pulsweitenmodulation. Der Übersichtlichkeit halber ist die Steuereinheit 3 nicht dargestellt und die Bezugszeichen für die elektronischen Komponenten (Halbleiterschalter S1, S2, S3, S4 und Dioden D1, D2, D3, D4), die Kondensatoren C1, C2 und die Eingangsanschlüsse T1, T2, T3 wurden weggelassen. Bezüglich der Bezeichnungen der elektronischen Komponenten wird daher auf Figur 1 verwiesen. Die gegenüber Figur 1 hinzugefügten Pfeilsymbole kennzeichnen den Stromfluss in dem Pulswechselrichter 1 in dem jeweiligen Schaltzustand.

In einem in Figur 2 oben links dargestellten ersten Schaltzustand fließt der Strom I in dem zweiten Brückenzweig B2 über die zweite Diode D2. In diesem Schaltzustand sind der zweite Halbleiterschalter S2 und der dritte Halbleiterschalter S3 eingeschaltet und der erste Halbleiterschalter S1 und der vierte Halbleiterschalter S4 sind abgeschaltet.

In einem auf den ersten Schaltzustand folgenden zweiten Schaltzustand, der in Figur 2 oben in der Mitte dargestellt ist, fließt der Strom I während der Verzögerungszeitdauer Δt in dem dritten Brückenzweig B3 über die dritte Diode D3 und den vierten Halbleiterschalter S4. In diesem Schaltzustand sind der dritte Halbleiterschalter S3 und der vierte Halbleiterschalter S4 eingeschaltet und der erste Halbleiterschalter S1 und der zweite Halbleiterschalter S2 sind abgeschaltet.

In einem auf den zweiten Schaltzustand folgenden dritten Schaltzustand, der in Figur 2 oben rechts dargestellt ist, fließt der Strom I in dem ersten Brückenzweig B1 über den ersten Halbleiterschalter S1. In diesem Schaltzustand sind der erste Halbleiterschalter S1 und der vierte Halbleiterschalter S4 eingeschaltet und der zweite Halbleiterschalter S2 und der dritte Halbleiterschalter S3 sind abgeschaltet.

Auf den dritten Schaltzustand folgt ein vierter Schaltzustand, der in Figur 2 unten links dargestellt ist und mit dem zweiten Schaltzustand übereinstimmt. In dem vierten Schaltzustand fließt der Strom I daher während der Verzögerungszeitdauer Δt wieder in dem dritten Brückenzweig B3 über die dritte Diode D3 und den vierten Halbleiterschalter S4.

Auf den vierten Schaltzustand folgt ein fünfter Schaltzustand, der in Figur 2 unten rechts dargestellt ist und mit dem ersten Schaltzustand übereinstimmt.

Figur 3 (FIG 3) zeigt ein Diagramm einer von dem in Figur 1 gezeigten Pulswechselrichter 1 in dem zweiten Betriebsmodus erzeugten Ausgangsspannung Uₚₕ gegenüber einem Referenzpotential (Erdpotential) in Abhängigkeit von einer Zeit t während einer Periodendauer t_{sw} der Pulsweitenmodulation. Ferner zeigt Figur 3 einen gestrichelt dargestellten zeitlichen Verlauf der Ausgangsspannung Uₚₕ, die von dem Pulswechselrichter 1 erzeugt werden würde, wenn der Pulswechselrichter 1 wie ein 2-Stufen-Pulswechselrichter angesteuert werden würde. Auf der Abszissenachse ist das Verhältnis t/t_{sw} der Zeit t zur Periodendauer t_{sw} der Pulsweitenmodulation aufgetragen, auf der Ordinatenachse ist das Verhältnis Uₚₕ/U_{d} der Ausgangsspannung Uₚₕ zu der Eingangsspannung U_{d} des Pulswechselrichters 1 aufgetragen. Die verschiedenen Werte des Verhältnisses Uₚₕ/U_{d} entsprechen in Figur 2 gezeigten Schaltzuständen.

Zwischen den Zeiten t=0 und t=t₁ wird der Pulswechselrichter 1 in dem ersten Schaltzustand betrieben. In diesem Schaltzustand nimmt die Ausgangsspannung Uₚₕ den Wert Uₚₕ=-U_{d}/2 an. Zwischen den Zeiten t=t₁ und t=t₂ wird der Pulswechselrichter 1 in dem zweiten Schaltzustand betrieben. In diesem Schaltzustand nimmt die Ausgangsspannung Uₚₕ den Wert Uₚₕ=0 an. Zwischen den Zeiten t=t₂ und t=t₃ wird der Pulswechselrichter 1 in dem dritten Schaltzustand betrieben. In diesem Schaltzustand nimmt die Ausgangsspannung Uₚₕ den Wert Uₚₕ=U_{d}/2 an. Zwischen den Zeiten t=t₃ und t=t₄ wird der Pulswechselrichter 1 in dem vierten Schaltzustand betrieben, der mit dem zweiten Schaltzustand übereinstimmt. In diesem Schaltzustand nimmt die Ausgangsspannung Uₚₕ wieder den Wert Uₚₕ=0 an. Zwischen den Zeiten t=t₄ und t=t_{sw} wird der Pulswechselrichter 1 in dem fünften Schaltzustand betrieben, der mit dem ersten Schaltzustand übereinstimmt. In diesem Schaltzustand nimmt die Ausgangsspannung Uₚₕ wieder den Wert Uₚₕ=-U_{d}/2 an.

Würde der Pulswechselrichter 1 dagegen in einem "2-Stufen-Betriebsmodus" betrieben werden, das heißt wie ein 2-Stufen-Pulswechselrichter angesteuert werden, so würde er abwechselnd in dem ersten Schaltzustand und dem dritten Schaltzustand betrieben werden, so dass die Ausgangsspannung Uₚₕ abwechselnd die Werte Uₚₕ=-U_{d}/2 und Uₚₕ=U_{d}/2 annehmen würde, das heißt, die Schaltzustände mit dem Wert Uₚₕ=0 würden entfallen.

Die erfindungsgemäße Ansteuerung des Pulswechselrichters 1 in dem zweiten Betriebsmodus hat gegenüber dem 2-Stufen-Betriebsmodus vor allem den Vorteil geringerer Schaltverluste. In dem 2-Stufen-Betriebsmodus ergeben sich die Schaltverluste während einer Periodendauer t_{sw} der Pulsweitenmodulation zu W_{S1on}+W_{D2off}+W_{S1off}, wobei W_{S1on} die Schaltverluste beim Einschalten des ersten Halbleiterschalters S1, W_{D2off} die Schaltverluste beim Abschalten des durch die zweite Diode D2 fließenden Stroms I und W_{S1off} die Schaltverluste beim Abschalten des ersten Halbleiterschalters S1 bezeichnen. Bei der erfindungsgemäßen Ansteuerung des Pulswechselrichters 1 in dem zweiten Betriebsmodus ergeben sich die Schaltverluste mit entsprechenden Bezeichnungen zu W_{S4on,h}+W_{D2off,h}+W_{S1on,h}+W_{D3off,h}+W_{S1off,h}+W_{S4off,h}, wobei der Zusatz h darauf hinweist, dass die Schaltvorgänge nur gegen die halbe Eingangsspannung ±U_{d}/2 erfolgen, was ein schnelleres Schalten bei kleineren Verlusten ermöglicht.

Daraus ergibt sich etwa folgende Verlustersparnis:
1. der vierte Halbleiterschalter S4 zeigt aufgrund der niedrigeren Spannungsklasse ein deutlich besseres Schaltverhalten, das sich in deutlich geringeren Ausschalt- und Diodenverlusten äu-ßert;
2. die Einschaltverluste im dritten Brückenzweig B3 sind primär von dem Diodenverhalten der komplementären Dioden D1 und D2 abhängig; durch die dynamisch viel bessere Niederspannungsdiode (beispielsweise auf Basis von Siliziumcarbid) in dem dritten Brückenzweig B3 können die Schaltverluste W_{S1on,h}, W_{D3off,h} und W_{S4off,h} in erster Näherung vernachlässigt werden.

Daraus ergeben sich bei der erfindungsgemäßen Ansteuerung des Pulswechselrichters 1 in dem zweiten Betriebsmodus in erster Näherung Schaltverluste von W_{D2off,h}+W_{S4on,h} +W_{S1off,h}. die nur halb so hoch wie in dem 2-Stufen-Betriebsmodus sind, da nur gegen die halbe Eingangsspannung ±U_{d}/2 geschaltet wird.

Ein weiterer Vorteil des zwischen die Schaltzustände mit Uₚₕ=±U_{d}/2 geschalteten Schaltzustands mit Uₚₕ=0 ist, dass dadurch die gesamte Schaltflanke verlängert wird. Durch die verlängerte Schaltflanke wird die durch Reflexion entstehende Spannungsüberhöhung am Leitungsende verringert. Der Betrieb des Pulswechselrichters 1 mit der erfindungsgemäßen Ansteuerung in dem zweiten Betriebsmodus resultiert daher auch in einer geringeren Belastung der Isolation angeschlossener Maschinen oder Filterelemente im Vergleich zu dem 2-Stufen-Betriebsmodus. Eine Begrenzung der Schaltgeschwindigkeit zum Schutz der Isolation vor zu hohen Spannungsspitzen muss daher nicht mehr vorgenommen werden.

Die Verzögerungszeitdauer Δt wird als eine Zeitdauer definiert, innerhalb derer die Speicherladung in dem ersten Halbleiterschalter S1 nach einer Abschaltung des Stroms I in dem ersten Brückenzweig B1 oder die Speicherladung in der zweiten Diode D2 nach einer Abschaltung des Stroms I in dem zweiten Brückenzweig B2 abgebaut wird. Die Verzögerungszeitdauer Δt ist sehr kurz verglichen mit der Zeitdauer des ersten Schaltzustands oder des zweiten Schaltzustands. Typischerweise beträgt die Verzögerungszeitdauer Δt nur wenige Mikrosekunden. Die Verzögerungszeitdauer Δt kann in Abhängigkeit von einer Stromstärke des Stroms I definiert werden, der vor dem Abschalten des Stroms I in dem jeweiligen Brückenzweig B1, B2 fließt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffs sind Personen mit männlicher, weiblicher oder anderer Geschlechteridentität mit umfasst.

## Patentansprüche

1. Verfahren zum Ansteuern eines 3-Stufen-Pulswechselrichters (1), der eine T-Typ-Schaltungstopologie aufweist mit einem ersten Brückenzweig (B1), der mit einem Eingangsanschluss (T1) für einen positiven Pol einer Eingangsspannung (U_{d}) des Pulswechselrichters (1) verbunden ist und einen ersten Halbleiterschalter (S1) und eine antiparallel zu dem ersten Halbleiterschalter (S1) geschaltete erste Diode (D1) aufweist, einem zweiten Brückenzweig (B2), der mit einem Eingangsanschluss (T2) für einen negativen Pol der Eingangsspannung (U_{d}) verbunden ist und einen zweiten Halbleiterschalter (S2) und eine antiparallel zu dem zweiten Halbleiterschalter (S2) geschaltete zweite Diode (D2) aufweist, und einem dritten Brückenzweig (B3), der mit einem Eingangsanschluss (T3) für einen Mittelabgriff der Eingangsspannung (U_{d}) verbunden ist und einen dritten Halbleiterschalter (S3), einen vierten Halbleiterschalter (S4), eine antiparallel zu dem dritten Halbleiterschalter (S3) geschaltete dritte Diode (D3) und eine antiparallel zu dem vierten Halbleiterschalter (S4) geschaltete vierte Diode (D4) aufweist, wobei
- ein Stromschwellenwert für einen Stromstärkebetrag eines in dem Pulswechselrichter (1) fließenden Stroms (I) definiert wird,
- in einem ersten Betriebsmodus des Pulswechselrichters (1) der Strom (I) während einer ersten Halbperiode eines durch den Pulswechselrichter (1) zu erzeugenden Wechselstroms abwechselnd durch den ersten Brückenzweig (B1) und den dritten Brückenzweig (B3) und in der zweiten Halbperiode abwechselnd durch den zweiten Brückenzweig (B2) und den dritten Brückenzweig (B3) geleitet wird,
- in einem zweiten Betriebsmodus des Pulswechselrichters (1) der Strom (I) abwechselnd durch den ersten Brückenzweig (B1) und den zweiten Brückenzweig (B2) geleitet wird, wobei bei jeder Umschaltung der Stromführung von dem ersten Brückenzweig (B1) auf den zweiten Brückenzweig (B2) und von dem zweiten Brückenzweig (B2) auf den ersten Brückenzweig (B1) der Strom (I) für eine Verzögerungszeitdauer (Δt) durch den dritten Brückenzweig (B3) geleitet wird, und
- der Pulswechselrichter (1) in dem ersten Betriebsmodus betrieben wird, wenn der Stromstärkebetrag kleiner als der Stromschwellenwert ist, und der Pulswechselrichter (1) andernfalls in dem zweiten Betriebsmodus betrieben wird.

2. Verfahren nach Anspruch 1, wobei die Verzögerungszeitdauer (Δt) als eine Zeitdauer definiert wird, innerhalb derer eine Speicherladung in einem Halbleiterbauelement (S1, D1) des ersten Brückenzweiges (B1) oder in einem Halbleiterbauelement (S2, D2) des zweiten Brückenzweiges (B2) nach einer Abschaltung des Stroms (I) in diesem Brückenzweig (B1, B2) abgebaut wird.

3. Verfahren nach Anspruch 2, wobei die Verzögerungszeitdauer (Δt) in Abhängigkeit von einer Stromstärke des Stroms (I) definiert wird, der vor dem Abschalten des Stroms (I) in dem jeweiligen Brückenzweig (B1, B2) fließt.

4. Verfahren nach einem der vorhergehenden Ansprüche, wobei der dritte Halbleiterschalter (S3) und der vierte Halbleiterschalter (S4) für eine geringere Stromtragfähigkeit als der erste Halbleiterschalter (S1) und der zweite Halbleiterschalter (S2) ausgelegt sind.

5. Verfahren nach Anspruch 4, wobei der Stromschwellenwert als ein Stromstärkebetrag definiert wird, der die Stromtragfähigkeit des dritten Halbleiterschalters (S3) und des vierten Halbleiterschalters (S4) charakterisiert.

6. Verfahren nach einem der vorhergehenden Ansprüche, wobei der dritte Halbleiterschalter (S3) und der vierte Halbleiterschalter (S4) von einem anderen Halbleitertyp als der erste Halbleiterschalter (S1) und der zweite Halbleiterschalter (S2) sind.

7. Verfahren nach einem der vorhergehenden Ansprüche, wobei der erste Halbleiterschalter (S1) und der zweite Halbleiterschalter (S2) Bipolartransistoren mit isolierter Gate-Elektrode sind und der dritte Halbleiterschalter (S3) und der vierte Halbleiterschalter (S4) Metalloxid-Halbleiter-Feldeffekttransistoren auf Basis von Siliziumcarbid sind, wobei die dritte Diode (D3) von der Bodydiode des dritten Halbleiterschalters (S3) gebildet wird und die vierte Diode (D4) von der Bodydiode des vierten Halbleiterschalters (S4) gebildet wird.

8. 3-Stufen-Pulswechselrichter (1), der eine T-Typ-Schaltungstopologie aufweist, der Pulswechselrichter (1) umfassend
- einen ersten Brückenzweig (B1), der mit einem Eingangsanschluss (T1) für einen positiven Pol einer Eingangsspannung (U_{d}) des Pulswechselrichters (1) verbunden ist und einen ersten Halbleiterschalter (S1) und eine antiparallel zu dem ersten Halbleiterschalter (S1) geschaltete erste Diode (D1) aufweist,
- einen zweiten Brückenzweig (B2), der mit einem Eingangsanschluss (T2) für einen negativen Pol der Eingangsspannung (U_{d}) verbunden ist und einen zweiten Halbleiterschalter (S2) und eine antiparallel zu dem zweiten Halbleiterschalter (S2) geschaltete zweite Diode (D2) aufweist,
- einen dritten Brückenzweig (B3), der mit einem Eingangsanschluss (T3) für einen Mittelabgriff der Eingangsspannung (U_{d}) verbunden ist und einen dritten Halbleiterschalter (S3), einen vierten Halbleiterschalter (S4), eine antiparallel zu dem dritten Halbleiterschalter (S3) geschaltete dritte Diode (D3) und eine antiparallel zu dem vierten Halbleiterschalter (S4) geschaltete vierte Diode (D4) aufweist, und
- eine Steuereinheit (3), die eingerichtet ist, die Halbleiterschalter (S1 bis S4) des Pulswechselrichters (1) in Abhängigkeit von einem Stromstärkebetrag eines in dem Pulswechselrichter (1) fließenden Stroms (I) derart anzusteuern, dass der Pulswechselrichter (1) in einem ersten Betriebsmodus betrieben wird, wenn der Stromstärkebetrag kleiner als ein Stromschwellenwert ist, und andernfalls in einem zweiten Betriebsmodus betrieben wird, wobei
- in dem ersten Betriebsmodus des Pulswechselrichters (1) der Strom (I) während einer ersten Halbperiode eines durch den Pulswechselrichter (1) zu erzeugenden Wechselstroms abwechselnd durch den ersten Brückenzweig (B1) und den dritten Brückenzweig (B3) und in der zweiten Halbperiode abwechselnd durch den zweiten Brückenzweig (B2) und den dritten Brückenzweig (B3) geleitet wird und
- in dem zweitem Betriebsmodus des Pulswechselrichters (1) der Strom (I) abwechselnd durch den ersten Brückenzweig (B1) und den zweiten Brückenzweig (B2) geleitet wird, wobei bei jeder Umschaltung der Stromführung von dem ersten Brückenzweig (B1) auf den zweiten Brückenzweig (B2) und von dem zweiten Brückenzweig (B2) auf den ersten Brückenzweig (B1) der Strom (I) für eine Verzögerungszeitdauer (Δt) durch den dritten Brückenzweig (B3) geleitet wird.

9. Pulswechselrichter (1) nach Anspruch 8, wobei die Verzögerungszeitdauer (Δt) als eine Zeitdauer definiert ist, innerhalb derer eine Speicherladung in einem Halbleiterbauelement (S1, D1) des ersten Brückenzweiges (B1) oder in einem Halbleiterbauelement (S2, D2) des zweiten Brückenzweiges (B2) nach einer Abschaltung des Stroms (I) in diesem Brückenzweig (B1, B2) abgebaut wird.

10. Pulswechselrichter (1) nach Anspruch 9, wobei die Verzögerungszeitdauer (Δt) in Abhängigkeit von einer Stromstärke des Stroms (I) definiert ist, der vor dem Abschalten des Stroms (I) in dem jeweiligen Brückenzweig (B1, B2) fließt.

11. Pulswechselrichter (1) nach einem der Ansprüche 8 bis 10, wobei der dritte Halbleiterschalter (S3) und der vierte Halbleiterschalter (S4) für eine geringere Stromtragfähigkeit als der erste Halbleiterschalter (S1) und der zweite Halbleiterschalter (S2) ausgelegt sind.

12. Pulswechselrichter (1) nach Anspruch 11, wobei der Stromschwellenwert als ein Stromstärkebetrag definiert ist, der die Stromtragfähigkeit des ersten Halbleiterschalters (S1) und des zweiten Halbleiterschalters (S2) charakterisiert.

13. Pulswechselrichter (1) nach einem der Ansprüche 8 bis 12, wobei der dritte Halbleiterschalter (S3) und der vierte Halbleiterschalter (S4) von einem anderen Halbleitertyp als der erste Halbleiterschalter (S1) und der zweite Halbleiterschalter (S2) sind.

14. Pulswechselrichter (1) nach einem der Ansprüche 8 bis 13, wobei der erste Halbleiterschalter (S1) und der zweite Halbleiterschalter (S2) Bipolartransistoren mit isolierter Gate-Elektrode sind und der dritte Halbleiterschalter (S3) und der vierte Halbleiterschalter (S4) Metalloxid-Halbleiter-Feldeffekttransistoren auf Basis von Siliziumcarbid sind, wobei die dritte Diode (D3) von der Bodydiode des dritten Halbleiterschalters (S3) gebildet wird und die vierte Diode (D4) von der Bodydiode des vierten Halbleiterschalters (S4) gebildet wird.
